# EUROPÄISCHE PATENTSCHRIFT

(11) **EP 1 312 264 B1**
(45) Veröffentlichungstag und Bekanntmachung des Hinweises auf die Patenterteilung: **24.01.2007**
(21) Anmeldenummer: 01127565.8
(22) Anmeldetag: 19.11.2001
(51) Int. Cl.: A22C 11/12

(54) **Längeneinheit mit Clipmodul**
Length measuring unit with clipping machine
Dispositif de mesure de longeurs avec un dispositif de serrage par clip

(43) Veröffentlichungstag der Anmeldung: 21.05.2003
(73) Patentinhaber: Albert Handtmann Maschinenfabrik GmbH & Co. KG, 88400 Biberach/Riss (DE)
(72) Erfinder: Staudenrausch, Georg, 88400 Biberach (DE); Müller, Gerhard, 88433 Schemmerhofen (DE)
(74) Vertreter: Grünecker, Kinkeldey, Stockmair & Schwanhäusser Anwaltssozietät

(56) Entgegenhaltungen:
- DE-A- 10 012 149
- DE-A- 19 953 694
- FR-A- 2 620 902
- US-A- 4 539 796
- US-A- 4 675 945
- US-A- 5 049 108
- US-A- 5 109 648

## Beschreibung

Die Erfindung betrifft eine Vorrichtung sowie ein Verfahren zur Wurstherstellung und eine Längeneinheit zur Verwendung für eine Vorrichtung zur Wurstherstellung gemäß den Oberbegriffen der Ansprüche 1, 12 und 22.

Aus der Druckschrift US-A-5 049 108 ist bereits eine Vorrichtung bzw. ein Verfahren zur Wurstherstellung bekannt, bei der in Transportrichtung der gefüllten Wursthülle unmittelbar vor der Längeneinheit ein Verdrängerelement angeordnet ist.

Aus den Druckschriften DE 199 53 694 sowie DE 100 12 149 A sind bereits Clipmodule bekannt.

Bei der automatischen Wurstherstellung werden üblicherweise Füllmaschinen eingesetzt. Solche Füllmaschinen bringen Wurstbrät durch ein Füllrohr in eine Wursthülle ein. Die Wursthülle befindet sich dazu im gerafften Zustand direkt auf dem Füllrohr oder in einer entsprechenden Hülse, die über das Füllrohr geschoben wird. Im Allgemeinen befindet sich am Ende des Füllrohres eine sogen. Darmbremse bzw. ein Bremsring. Nach dem Ausstoß einer Wurstportion aus dem Füllrohr, die einer einzelnen Wurst entspricht, wird die Wursthülle mit Hilfe des Bremsringgetriebes und einer Abdrehvorrichtung abgedreht. Um das Wurstbrät durch das Füllrohr zu pressen, wird ein entsprechendes Füllorgan eingesetzt, das das Wurstbrät intermittierend in das Füllrohr befördert. Eine solche Füllmaschine ist z.B. in dem europäischen Patent EP 0232 812 beschrieben.

Um Würste mit konstanter Länge sicherstellen zu können, wird dem Füllrohr eine angetriebene Längeneinheit nachgeschaltet. Diese Längeneinheit zieht die Wursthülle durch den Bremsring hindurch vom Füllrohr ab. Während des Abdrehvorgangs wird die bereits gefüllte Wurst durch das Längengerät daran gehindert, sich mit dem gedrehten Teil der Wursthülle zu drehen.

Durch Einstellung der Abfördergeschwindigkeit während der Wurstbefüllung im Verhältnis zu der Füllausstoßgeschwindigkeit kann die Länge der einzelnen Würste festgelegt werden. Die Geschwindigkeit, mit der die gefüllte Wursthülle abgefördert wird, wird in Abhängigkeit einer Soll-Füllgutausstoßgeschwindigkeit eingestellt. Ein derartiges Verfahren ist in der deutschen Offenlegungsschrift 24 02 817 beschrieben.

Es ist auch bereits bekannt, die Wurstenden über sogen. Clipper zu verschließen. Das Verschließen von Würsten durch den Clipper erfolgt entweder durch schließen der bereits hergestellten, abgedrehten Würste per Hand, was jedoch zeitaufwendig ist. Es wurde auch bereits vorgeschlagen, einen Clipper direkt am Füllrohr vorzusehen. Bei diesen Verfahren werden die gefüllten Wursthüllen durch das Clippen in Einzelwürste unterteilt und verschlossen. Es hat sich jedoch gezeigt, das die Verwendung derartiger Clipper direkt am Füllrohr den Nachteil mit sich bringt, dass sich das Volumen und die äußere Form der ein zelnen Würste nur unzureichend reproduzieren lässt, insbesondere dann, wenn Naturdarm als Wursthülle eingesetzt wird. Zum Einen sind bei Naturdarm die Wanddicke und auch das Kaliber nicht konstant, so dass sich unterschiedliche Wurstformen ergeben können. Zum Anderen kann sich aufgrund der nicht konstanten Drehfähigkeit beim ungleichmäßigen Füllgutausstoßverlauf eine ungleichmäßige äußere Form ergeben. Dadurch, dass bei den gefüllten Wursthüllen durch das Clippen das Füllgut zusätzlich verdrängt wird, ergeben sich Verformungen an den Wurstenden.

Ausgehend von diesem Stand der Technik liegt der vorliegenden Erfindung die Aufgabe zugrunde, eine Vorrichtung und ein Verfahren zur Wurstherstellung bereitzustellen, mit dem die Würste einfach verschlossen werden können und dennoch Würste mit gleicher Länge und Volumen - insbesondere auch mit Naturdarm als Wursthülle - auf einfache Art und Weise hergestellt werden können.

Diese Aufgabe wird durch die Merkmale der Ansprüche 1, 12 und 22 gelöst.

Die vorliegende Erfindung bringt den Vorteil mit sich, dass die gefüllten Wursthüllen kontrolliert über eine Längeneinheit abgeführt werden und somit in eine bestimmte Form gebracht werden, so dass sie eine gleiche Form aufweisen. Dadurch, dass sich vor der Längeneinheit das Clipmodul befindet, können die gefüllten Wursthüllen sehr genau über das Clipmodul in einzelne Würste unterteilt werden, die eine gleiche Form und ein exakt gleiches Volumen auch bei der Verwendung von Naturdarm aufweisen. Somit ergeben sich bessere Gewichte bei Aufschnittsware durch konstante Füllkaliber und bessere Gewichte bei Wurststrängen, insbesondere bei der ersten und letzten Portion. Dadurch, dass das Clipmodul vor der Längeneinheit angeordnet ist, sind auch zähfließende, bzw. feste Brätmassen prozesssicher produzierbar. Beim Clippen vor den Transportbändern der Längeneinrichtung wird die Masse innerhalb der abgeclippten Portion nicht weiter verdrängt, so dass es zu keinen Darmplatzem und unförmigen Portionen (z.B. Verdickungen an den Enden), kommen kann. Zusätzlich erforderliche Wursthülle kann einfach durch die Längeneinheit vom Füllrohr nachgezogen werden. Dadurch, dass das Clipmodul vor der Längeneinheit angeordnet ist und nicht nach der Längeneinheit, muss der Abstand des Clippers von der Abdrehstelle kein Vielfaches der Portionslänge mehr sein, wenn der Cip genau zu dem Zeitpunkt angebracht werden soll, zu dem die Fülleinheit nach dem Ausstoß einer Portion stoppt. Dies ist die Voraussetzung für die erwünschte hohe Gewichtsgenauigkeit. Außerdem ist es bei der erfindungsgemäßen Anordnung des Clipmoduls sehr einfach, die richtige Clipstelle zu treffen, da es nicht zu aufsummierenden Längentoleranzen und somit zu Positionsverschiebungen kommen kann.

Das Clipmodul kann Verdrängerelemente umfassen, durch deren Eingreifen die gefüllte Darmhülle unterteilt wird.

Dem Füllrohr kann eine Abdreheinheit derart zugeordnet sein, dass das Verschließen durch das Clipmodul und das Abdrehen an einer Stelle erfolgt. D.h., dass beim Clippen vor den Transportbändern der Längeneinheit das Abdrehen und das Verdrängen durch den Clipper gleichzeitig stattfinden kann, so dass die Portion synchron mit dem Füllvorgang zwischen den Transportbändern weitertransportiert wird. Innerhalb der Portion findet deshalb keine oder nur eine sehr geringe Relativbewegung der Masse zur Wursthülle statt. Dadurch, dass die Funktionen Abdrehen und Clippen überlagert werden können, ergibt sich eine höhere Portionsleistung der Maschine. Beim Clippen vor der Längeneinheit kann die Abdrehstelle exakt getroffen werden, da es insbesondere bei Wurstketten mit kurzen Portionslängen, zu keinen sich aufsummierenden Längentoleranzen und Positionsverschiebungen kommen kann. Somit ist gewährleistet, dass der Clip immer an der korrekten Abdrehstelle positioniert wird.

Die Abdreheinheit und das Clipmodul können so angeordnet und angesteuert sein, dass die Stelle des Eingreifens der Verdrängerelemente der Abdrehstelle entspricht.

Das Clipmodul kann einen Abschneider umfassen, so dass das Verschließen und Abschneiden platzsparend in einer Einheit erfolgen kann. Vorteilhafterweise umfasst das Clipmodul auch einen Schlaufeneinleger für die herzustellenden Würste. Die Längeneinheit kann auch mit einer Übergabeeinheit verbunden sein, die die hergestellten Würste dann einer Transporteinrichtung, z.B. einem Förderband oder einer Aufhängeeinrichtung, zuführt.

In vorteilhafter Weise sind die Fülleinheit, die Längeneinheit und das Clipmodul über Steuerleitungen mit einer Steuerung für die Vorrichtung zur Wurstherstellung verbunden. Somit können die Funktionen der Fülleinheit, Längeneinheit und des Clipmoduls synchron zueinander verlaufen. Weiter kann auch die Transporteinrichtung mit der Steuerung der Vorrichtung zur Wurstherstellung verbunden sein, um auch deren Funktionen mit den Funktionen der Fülleinheit, des Clipmoduls und der Längeneinheit zu synchronisieren.

Es ist vorteilhaft, wenn das Clipmodul die gefüllten Wursthüllen an zwei Stellen nebeneinander verschließt, wobei der Abschneider des Clipmoduls die gefüllten Wursthüllen dann zwischen den zwei Stellen abschneidet. Das Clipmodul kann von der Steuereinrichtung so gesteuert werden, dass ein Abschneider nur nach jedem n-ten Verschließen erfolgt, um so Wurststränge mit einer bestimmten Wurstanzahl zu erhalten (n∈N).

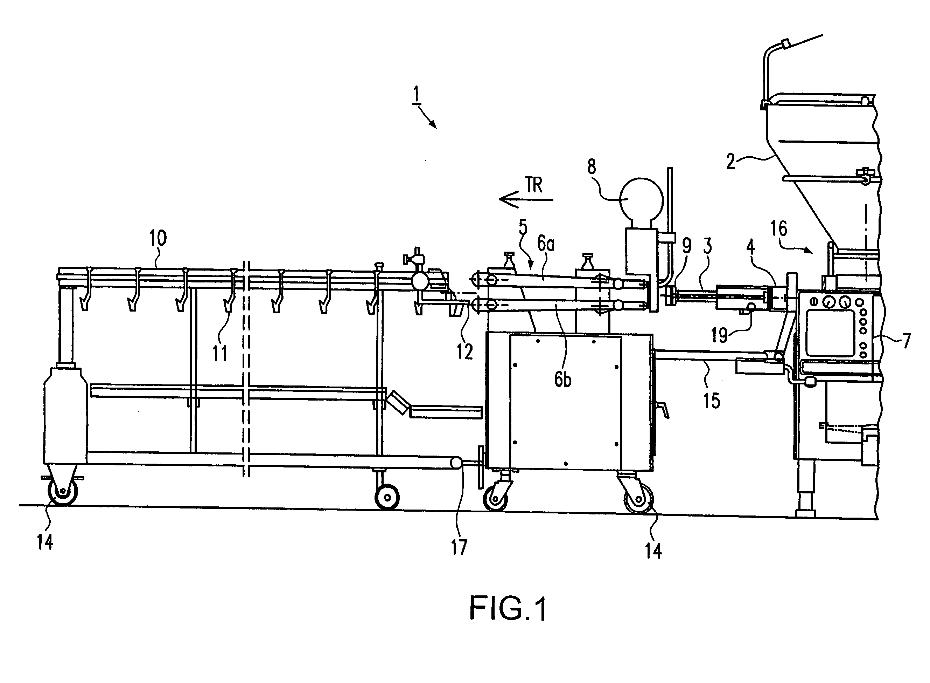

Die vorliegende Erfindung wird nachfolgend unter Bezugnahme der Figur 1 beschrieben, die eine Vorrichtung zur Wurstherstellung gemäß der vorliegenden Erfindung zeigt.

Die Figur zeigt schematisch eine Ausführungsform der erfindungsgemäßen Vorrichtung. Eine Fülleinheit 16 umfasst einen Einfülltrichter 2 für das Wurstbrät und ein Füllrohr 3. Aus dem Füllrohr 3 wird das Wurstbrät ausgestoßen. Dazu kann innerhalb der Fülleinheit 16 eine nicht gezeigte Flügelzellenpumpe vorgesehen sein. Das Füllrohr 3 kann mit Hilfe der optional vorgesehenen Abdrehvorrichtung 4 um seine eigene Achse gedreht werden. Am Ende des Füllrohrs 3 befindet sich ein Bremsringgehäuse 9, durch das mit Hilfe der Längeneinrichtung 5 die Wursthülle abgezogen wird, während sie durch das Füllrohr 3 gefüllt wird. Die Längeneinheit 5 umfasst zwei angeriebene Endlosbänder 6a und 6b, die zwischen sich die gefüllte Wursthülle abtransportieren. Die Endlosbänder 6a, 6b der Längeneinheit 5 werden über einen nicht extra dargestellten Antrieb angetrieben. In diesem Ausführungsbeispiel ist die Längeneinheit eine gesonderte Einheit, die auf Rollen 14 steht und somit beweglich ist. Die Längeneinheit 5 kann über eine Befestigung 15 mit der Fülleinheit 16 verbunden werden. Zwischen Füllrohr 3 und Längeneinheit 5 ist ein Clipmodul 8 angeordnet. Das Clipmodul 8 umfasst einen Clipper, wie er im Fleisch verarbeitenden Gewerbe zum Herstellen von Verschlüssen bei Würsten eingesetzt wird. Weiter kann das Clipmodul 8 einen integrierten Abschneider zum Durchtrennen der einzelnen Würste sowie einen Schlaufeneinleger umfassen. In Transportrichtung TR hinter der Längeneinheit 5 befindet sich eine Übergabeeinheit 12, die die verschlossenen Würste an eine Aufhängeeinheit 10 mit mehreren Haken 11 weitergibt. Alternativ dazu kann die Übergabeeinheit 12 die fertigen Würste auch an einen Auslauf mit Förderband weitergeben. Auch die Aufhängeeinheit 10 ist auf Rollen 14 gelagert und über eine Befestigung 17 mit der Längeneinheit 5 verbunden.

Die Vorrichtung zur Wurstherstellung umfasst weiter eine Steuerung 7. Die Steuerung 7 ist über nicht gezeigte Leitungen mit der Fülleinheit 16, der Längeneinheit 5, dem Clipmodul 8 sowie der Aufhängeeinheit 10 verbunden. So ist es möglich, die Funktionen der Fülleinheit 16, der Längeneinheit 5, des Clipmoduls 8 und der Übergabeeinheit 12 bzw. der nachfolgenden Transporteinheit zu steuern und zu synchronisieren. Die Steuerung 7 ist in der Fülleinheit 16 integriert.

Der Betrieb einer derartigen Vorrichtung zur Wurstherstellung wird nun im Folgenden beschrieben:

In an sich bekannter Weise wird das Bremsringgehäuse 9 mit Hilfe eines Schwenkhebelmechanismus 19 von dem Füllrohr 3 weggeschwenkt. Alternativ kann auch das Füllrohr entgegen der Transportrichtung verschoben und seitlich verschwenkt werden. Eine geraffte Wursthülle wird auf das Füllrohr aufgebracht und das Bremsringgehäuse 9 wird wieder zurückgeschwenkt bzw. alternativ das Füllrohr wieder eingeschwenkt und in Transportrichtung in Arbeitsposition verschoben. Über einen Trichter 2 wird das Füllgut, z.B. das Wurstbrät, in die Vorrichtung eingefüllt. Mit Hilfe der in der Fülleinheit 16 befindlichen Flügelzellenpumpe wird das Wurstbrät durch das Füllrohr 3 ausgepresst und befüllt die Wursthülle. Diese wird dadurch von dem Füllrohr 3 abgezogen. Die Längeneinheit 5, die über die Rollen 14 genau zu dem Bremsringgehäuse 9 ausgerichtet wurde und über die Befestigung 15 mit der Fülleinheit 16 verbunden wurde, erfasst dann mit ihren Endlosbändern 6a und 6b die Wursthülle. Die Endlosbänder 6a und 6b werden so angetrieben, dass sie sich von dem Füllrohr 3 wegbewegen. Zur Aufrechterhaltung der nötigen Spannung befindet sich in dem Bremsringgehäuse ein Bremsring, der die Wursthülle beim Abzug vom Füllrohr 3 unter geringer Spannung hält. Das Clipmodul 8, das entweder über eine nicht dargestellte Halterung an der Längeneinheit 5 fest angeordnet ist oder fest am Bremsringgehäuse befestigt ist, unterteilt und verschließt die gefüllte Wursthülle in Einzelwürste mit einem Clip. Das Verdrängen erfolgt durch Verdrängerelemente, die sich aufeinander zubewegen oder die ineinander eingreifen und so die gefüllte Wursthülle einschnüren. Beim Clippen vor den Transportbändern 6a und 6b findet das Verdrängen und Verschließen durch den Clipper gleichzeitig statt und die Portion wird synchron mit dem Füllvorgang zwischen den Transportbändern weitertransportiert. Innerhalb der Portion findet deshalb keine oder nur eine sehr geringe Relativbewegung zwischen der Masse und Wursthülle statt. Somit kommt es nicht zu unförmigen Portionen oder Darmplatzem und die beim Verdrängen des Füllguts notwendige zusätzlich erforderliche Wursthülle kann von der Tülle einfach nachgezogen werden. Die Einzelwürste oder Wurststränge mit bestimmter Wurstanzahl werden dann in Transportrichtung TR über die Längeneinheit zu der Übergabeeinheit 12 transportiert und an diese übergeben, die dann die Einzelwürste oder Wurststränge an die Haken 11 der Aufhängeeinheit 10 übergibt. Alternativ dazu kann die Übergabeeinheit 12 die Einzelwürste oder Wurststränge auch an einen Auslauf mit Förderband weitergeben. Wie bereits beschrieben, müssen die Funktionen des Clipmoduls 8, d.h., das Verschließen, das Abtrennen und das Schlaufenlegen zu den Funktionen der Längeneinheit, wie z.B. Geschwindigkeit der Förderbänder 6a, 6b sowie zu den Funktionen der Fülleinheit 16, wie z.B. Füllgutausstoßmenge und Füllgutausstoßgeschwindigkeit synchronisiert sein. Somit kann entsprechend dem Takt des Clipmoduls 8 eine exakte Wurstlänge mit genau definiertem, reproduzierbarem Füllvolumen hergestellt werden. Durch Servoantriebstechnik kann die Portionierleistung gegenüber dem Stand der Technik zusätzlich erhöht werden. Auch die Übergabeeinheit 12 bzw. die nachfolgende Transporteinrichtung wird über die Steuerung 7 so gesteuert, dass ein kontinuierlicher Abtransport der Würste möglich ist.

Alternativ zu dem zuvor beschriebenen Betrieb kann das Füllrohr 3 der Fülleinheit 16, die jeweils eine Portion Wurstbrät für eine einzelne Wurst ausstößt, zusammen mit dem gerafften, noch nicht gefüllten Wursthüllenmaterial durch das Abdrehgetriebe 4 gedreht werden. Da die bereits gefüllte Wursthülle durch die Längeneinheit 5 bzw. dessen Endlosbänder 6a und 6b gehalten wird, wird die Wursthülle auf Torsion gespannt. Durch den Eingriff der Verdrängerelemente des Clipmoduls entsteht genau an dieser Stelle der gefüllten Darmhülle eine Abschnürung, die zur Ausbildung einzelner Würste führt. Das Clipmodul 8 kann dann die einzelnen Würste an der Abschnürung verschließen. Die Anordnung des Clipmoduls 8 vor der Längeneinheit 5 macht es möglich, die Abdrehstelle zum Clippen einfach und korrekt zu treffen, da es zu keinen Längentoleranzen und Positionsverschiebungen kommen kann. Insbesondere erlaubt diese Anordnung, dass die Funktionen Abdrehen, Verdrängen und Clippen zeitlich überlagert werden können, was zu höheren Portionsleistungen der Maschine führt. Findet das Abdrehen und Verschließen durch den Clipper gleichzeitig statt, kommt es wieder zu keiner oder nur sehr geringer Relativbewegung der Masse und der Wursthülle und somit zu keinen Darmplatzern. Wie bereits beschrieben, kann zusätzlich erforderliche Wursthülle einfach von der Tülle abgezogen werden.

Der Clipper 8 kann auch jeweils zwei Metallclips zwischen zwei Einzelwürste setzen, wobei dann beispielsweise ein Abschneider die Würste zwischen den beiden Clips trennen kann. Der Abschneider kann nach jedem n-ten-Verschließen benachbarte Würste zwischen den Metallclips abschneiden, um so Wurststränge mit einer bestimmten Wurstanzahl zu erzeugen.

Die vorliegende Erfindung erlaubt die Verarbeitung von geraden Portionen, Einzelwürsten, Wurstketten und halben Ringen in nicht zu wässernden, gerafften Kunstdärmen bis zu 7 cm Durchmesser und Einzelwürste und Wurstketten im Naturdarm bis ca. 5 cm Durchmesser.

## Patentansprüche

1. Vorrichtung zur Wurstherstellung (1) mit einer Fülleinheit (16) mit Füllrohr (3) zum Befüllen von Wursthüllen, einer Längeneinheit (5) zum kontrollierten Abführen der gefüllten Wursthüllen, **dadurch gekennzeichnet, dass** in Transportrichtung der gefüllten Wursthüllen unmittelbar vor der Längeneinheit (5) ein Clipmodul (8) zum Verschließen der gefüllten Wursthüllen angeordnet ist.

2. Vorrichtung nach Anspruch 1, **dadurch gekennzeichnet, dass** das Clipmodul (8) Verdrängerelemente umfasst, durch deren Eingreifen die gefüllte Darmhülle unterteilt wird.

3. Vorrichtung nach Anspruch 1, **dadurch gekennzeichnet, dass** dem Füllrohr (3) eine Abdreheinheit (4) derart zugeordnet ist, dass das Verschließen durch das Clipmodul und das Abdrehen an einer Stelle erfolgt.

4. Vorrichtung nach Anspruch 2 und 3, **dadurch gekennzeichnet, dass** die Abdreheinheit (4) und das Clipmodul (8) derart angeordnet sind, dass an der Stelle des Eingreifens der Verdrängerelemente die Abdrehstelle entsteht.

5. Vorrichtung nach mindestens einem der vorgehenden Ansprüche, **dadurch gekennzeichnet, dass**, das Clipmodul (8) einen Abschneider umfasst.

6. Vorrichtung nach mindestens einem der vorhergehenden Ansprüche, **dadurch gekennzeichnet, dass** das Clipmodul (8) einen Schlaufenleger umfasst.

7. Vorrichtung nach mindestens einem der vorhergehenden Ansprüche, **dadurch gekennzeichnet, dass** sich an die Längeneinheit (5) in Transportrichtung der gefüllten Wursthüllen eine Übergabeeinheit (12) anschließt.

8. Vorrichtung nach mindestens einem der vorhergehenden Ansprüche, **dadurch gekennzeichnet, dass** in Transportrichtung der gefüllten Wursthüllen nach der Übergabeeinrichtung (12) eine Transporteinrichtung (10) folgt.

9. Vorrichtung nach mindestens einem der vorhergehenden Ansprüche, **dadurch gekennzeichnet, dass** die Transporteinrichtung eine Aufhängeeinheit (10) oder ein Förderband ist.

10. Vorrichtung nach Anspruch 1, **dadurch gekennzeichnet, dass** die Fülleinheit (16), die Längeneinheit (5) und das Clipmodul (8) über Steuerleitungen mit einer Steuerung (7) für die Vorrichtung zur Wurstherstellung verbunden sind, so dass die Funktionen der Längeneinheit (5) des Clipmoduls (8) und der Fülleinheit (16) synchronisierbar sind.

11. Vorrichtung nach Anspruch 1,5 und 8 **dadurch gekennzeichnet, dass** die Transporteinrichtung mit der Steuerung für die Vorrichtung zur Wurstherstellung über Steuerleitungen verbunden sind, um deren Funktionen mit den Funktionen der Fülleinheit (16), der Längeneinheit (5) und des Clipmoduls (8) zu synchronisieren.

12. Verfahren zum Herstellen von Würsten, wobei Wursthüllen über ein Füllrohr (3) befüllt und über eine Längeneinheit (5) kontrolliert abgeführt werden, **dadurch gekennzeichnet, dass** die gefüllten Wursthüllen unmittelbar vor der Längeneinheit (5) durch ein Clipmodul (8) verschlossen werden.

13. Verfahren nach Anspruch 12, **dadurch gekennzeichnet, dass** die Wursthüllen nach dem Füllen an der gleichen Stelle abgedreht und vom Clipmodul verschlossen werden bevor sie über die Längeneinheit (5) abgeführt werden.

14. Verfahren nach Anspruch 12 oder 13, **dadurch gekennzeichnet, dass** Verdrängerelemente des Clipmoduls (8) die gefüllte Wursthülle vor dem Verschließen oder vor dem Abdrehen unterteilen.

15. Verfahren nach einem der Ansprüche 12 bis 14, **dadurch gekennzeichnet, dass** das Clipmodul (8) derart über eine Steuerung (7) gesteuert wird, dass das Verschließen der gefüllten Wursthüllen synchron zum Abfüllen der Wursthüllen erfolgt.

16. Verfahren nach einem der Ansprüche 12 bis 15, **dadurch gekennzeichnet, dass** das Clipmodul (8) die gefüllten Wursthüllen an zwei Stellen nebeneinander verschließt.

17. Verfahren nach Anspruch 16, **dadurch gekennzeichnet, dass** das Clipmodul (8) die gefüllten Wursthüllen zwischen den zwei Stellen abschneidet.

18. Verfahren nach einem der Ansprüche 12 bis 17, **dadurch gekennzeichnet, dass** ein Abschneiden nach jedem n-ten Verschließen erfolgt, um so Wurststränge mit einer bestimmten Anzahl zu erhalten (n ∈ IN).

19. Verfahren nach mindestens einem der Ansprüche 12 bis 18, **dadurch gekennzeichnet, dass** die von dem Clipmodul (8) verschlossenen und von der Längeneinheit (5) abgeführten gefüllten Wursthüllen einer Übergabeeinheit (12) zugeführt werden.

20. Verfahren nach mindestens einem der Ansprüche 12 bis 19, **dadurch gekennzeichnet, dass** die gefüllten Wursthüllen in Transportrichtung nach der Übergabeeinheit (12) einer Transporteinrichung übergeben werden.

21. Verfahren nach mindestens einem der Ansprüche 12 bis 20, **dadurch gekennzeichnet, dass** die Funktionen des Clipmoduls (8) zu den Funktionen der Längeneinheit und der Transporteinrichtung synchron verlaufen.

22. Längeneinheit zur Verwendung bei einer Vorrichtung zum Herstellen von Würsten (1) gemäß Anspruch 1, **dadurch gekennzeichnet, dass** die Längeneinheit (5) ein Clipmodul (8) umfasst, das an ihrem in Transportrichtung der Würste vorderen Ende angeordnet ist.

## Claims

1. A device for the manufacture of sausages (1) with a filling unit (16) with filling tube (3) for filling sausage sleeves, a length unit (5) for the controlled delivery of the filled sausage sleeves, **characterized in that** a clip module (8) for closing the filled sausage sleeves is arranged in the transport direction of the filled sausage sleeves directly in front of the length unit (5).

2. The device according to claim 1, **characterized in that** the clip module (8) incorporates compression elements, through the action of which the filled sausage casing is subdivided.

3. The device according to claim 1, **characterized in that** a twisting off unit (4) is assigned to the filling tube (3) such that the closure by the clip module and the twisting off occur at one point.

4. The device according to claims 2 and 3, **characterized in that** the twisting off unit (4) and the clip module (8) are arranged such that the twisting off point occurs at the point of action of the compression elements.

5. The device according to at least one of the preceding claims, **characterized in that** the clip module (8) incorporates a cutter.

6. The device according to at least one of the preceding claims, **characterized in that** the clip module (8) includes a loop inserter.

7. The device according to at least one of the preceding claims, **characterized in that** a transfer unit (12) follows the length unit (5) in the transport direction of the filled sausage sleeves.

8. The device according to at least one of the preceding claims, **characterized in that** a transport device (10) follows the transfer device (12) in the transport direction of the filled sausage sleeves.

9. The device according to at least one of the preceding claims, **characterized in that** the transport device is a hanger unit (10) or a conveyor.

10. The device according to claim 1, **characterized in that** the filling unit (16), the length unit (5) and the clip module (8) are connected through control cables to a controller (7) for the device for sausage manufacture, such that the functions of the length unit (5), clip module (8) and filling unit (16) can be synchronized.

11. The device according to claims 1, 5 and 8, **characterized in that** the transport device is connected to the controller for the device for sausage manufacture via control cables in order to synchronize its functions with the functions of the filling unit (16), length unit (5) and clip module (8).

12. A method for manufacturing sausages, whereby sausage sleeves are filled via a filling tube (3) and delivered in a controlled manner via a length unit (5), **characterized in that** the filled sausage sleeves are closed directly before the length unit (5) by a clip module (8).

13. The method according to claim 12, **characterized in that** the sausage sleeves are twisted off and closed by the clip module at the same point after filling before they are delivered via the length unit (5).

14. The method according to claim 12 or 13, **characterized in that** compression elements of the clip module (8) subdivide the filled sausage sleeve before closure or before twisting off.

15. The method according to one of the claims 12 to 14, **characterized in that** the clip module (8) is controlled by a controller (7) such that closure of the filled sausage sleeves occurs synchronously with the filling of the sausage sleeves.

16. The method according to one of the claims 12 to 15, **characterized in that** the clip module (8) closes the filled sausage sleeves at two adjacent points.

17. The method according to claim 16, **characterized in that** the clip module (8) cuts the filled sausage sleeves between the two points.

18. The method according to one of the claims 12 to 17, **characterized in that** cutting occurs after each nth closure in order to obtain sausage chains with a certain number of sausages (n e IN).

19. The method according to at least one of the claims 12 to 18, **characterized in that** the filled sausage sleeves closed by the clip module (8) and delivered by the length unit (5) are passed to a transfer unit (12).

20. The method according to at least one of the claims 12 to 19, **characterized in that** the filled sausage sleeves are transferred after the transfer unit (12) in the transport direction to a transport device.

21. The method according to at least one of the claims 12 to 20, **characterized in that** the functions of the clip module (8) run synchronously to the functions of the length unit and the transport device.

22. A length unit for use with a device for manufacturing sausages (1) according to claim 1, **characterized in that** the length unit (5) incorporates a clip module (8) which is arranged at its front end in the transport direction of the sausages.

## Revendications

1. Dispositif de fabrication de saucisses (1) comprenant une unité de remplissage (16) avec tube de remplissage (3) pour remplir des enveloppes de saucisses, une unité de mesure de longueurs (5) pour l'évacuation contrôlée des enveloppes de saucisses remplies, **caractérisé en ce qu'**un module à pince (8), destiné à obturer les enveloppes de saucisse remplies, est disposé immédiatement en amont de l'unité de mesure de longueurs (5), dans la direction de transport des enveloppes de saucisses remplies.

2. Dispositif selon la revendication 1, **caractérisé en ce que** le module à pince (8) comprend des éléments repousseurs, par l'intervention desquels l'enveloppe de boyau remplie est subdivisée.

3. Dispositif selon la revendication 1 **caractérisé en ce qu'**une unité de torsion (4) est associée au tube de remplissage (3) de telle façon que l'obturation par le module à pince et la torsion s'effectuent en un seul point.

4. Dispositif selon la revendication 2 et 3, **caractérisé en ce que** l'unité de torsion (4) et le module à pince (8) sont disposés de telle façon que le point de torsion se crée au point d'intervention des éléments repousseurs.

5. Dispositif selon l'une au moins des revendications précédentes, **caractérisé en ce que** le module à pince (8) comprend un sectionneur.

6. Dispositif selon l'une au moins des revendications précédentes, **caractérisé en ce que** le module à pince (8) comporte un pose-boucle.

7. Dispositif selon l'une au moins des revendications précédentes, **caractérisé en ce qu'**une unité de transfert (12) fait suite à l'unité de mesure de longueurs (5) dans la direction de transport des enveloppes de saucisse remplies.

8. Dispositif selon l'une au moins des revendications précédentes, **caractérisé en ce qu'**un dispositif de transport (10) fait suite à l'unité de transfert (12) dans la direction de transport des enveloppes de saucisses remplies.

9. Dispositif selon l'une au moins des revendications précédentes, **caractérisé en ce que** le dispositif de transport est une unité d'accrochage (10) ou une bande transporteuse.

10. Dispositif selon la revendication 1, **caractérisé en ce que** l'unité de remplissage (16), l'unité de mesure de longueurs (5) et le module à pince (8) sont reliés par des lignes de commande à une commande (7) destinée au dispositif de fabrication de saucisses, de telle façon que les fonctions de l'unité de mesure de longueurs (5), du module à pince (8) et de l'unité de remplissage (16) peuvent être synchronisées.

11. Dispositif selon la revendication 1, 5 et 8, **caractérisé en ce que** le dispositif de transport est relié à la commande destinée au dispositif de fabrication de saucisses, par l'intermédiaire de lignes de commande, pour synchroniser ses fonctions avec les fonctions de l'unité de remplissage (16), de l'unité de mesure de longueurs (5) et du module à pince (8).

12. Procédé de fabrication de saucisses, dans lequel des enveloppes de saucisses sont remplies par l'intermédiaire d'un tube de remplissage (3) et sont évacuées de manière contrôlée par l'intermédiaire d'une unité de mesure de longueurs (5), **caractérisé en ce que** les enveloppes de saucisses remplies sont obturées par un module à pince (8) immédiatement en amont de l'unité de mesure de longueurs (5).

13. Procédé selon la revendication 12, **caractérisé en ce qu'**après le remplissage, les enveloppes de saucisses sont tordues au même point puis obturées par le module à pince, avant d'être évacuées par l'intermédiaire de l'unité de mesure de longueurs (5).

14. Procédé selon la revendication 12 ou 13, **caractérisé en ce que** les éléments repousseurs du module à pince (8) divisent l'enveloppe de saucisse avant l'obturation ou avant la torsion.

15. Procédé selon l'une des revendications 12 à 14, **caractérisé en ce que** le module à pince (8) est commandé par une commande (7) de telle façon que l'obturation des enveloppes de saucisses remplies s'effectue de manière synchrone avec le remplissage des enveloppes de saucisses.

16. Procédé selon l'une des revendications 12 à 15, **caractérisé en ce que** le module à pince (8) obture les enveloppes de saucisses remplies en deux points contigus.

17. Procédé selon la revendication 16, **caractérisé en ce que** le module à pince (8) coupe les enveloppes de saucisses remplies entre les deux points.

18. Procédé selon l'une des revendications 12 à 17, **caractérisé en ce qu'**une coupe s'effectue après chaque n-ième obturation, afin d'obtenir des rangées de saucisses d'un certain nombre (n ∈ IN).

19. Procédé selon l'une des revendications 12 à 18, **caractérisé en ce que** les enveloppes de saucisses remplies, obturées par le module à pince (8) et évacuées par l'unité de mesure de longueurs (5), sont acheminées vers une unité de transfert (12).

20. Procédé selon l'une des revendications 12 à 19, **caractérisé en ce que** les enveloppes de saucisses remplies sont transmises à une unité de transport, en aval de l'unité de transfert (12) dans la direction de transport.

21. Procédé selon l'une des revendications 12 à 20, **caractérisé en ce que** les fonctions du module à pince (8) s'effectuent de manière synchrone par rapport aux fonctions de l'unité de mesure de longueurs et du dispositif de transport.

22. Unité de mesure de longueurs destinée à être utilisée sur un dispositif de fabrication de saucisses (1) selon la revendication 1, **caractérisé en ce que** l'unité de mesure de longueurs (5) comprend un module à pince (8) qui est disposé à son extrémité antérieure, dans la direction de transport des saucisses.
